# EUROPEAN PATENT SPECIFICATION

(11) **EP 3 464 066 B1**
(45) Date of publication and mention of the grant of the patent: **28.12.2022**
(21) Application number: 17728268.8
(22) Date of filing: 23.05.2017
(51) Int. Cl.: B64C 39/02

(54) **SAFETY DEVICE FOR CHECKING A REMOTELY PILOTED AIRCRAFT**
SICHERHEITSVORRICHTUNG ZUR ÜBERPRÜFUNG EINES FERNGESTEUERTEN FLUGZEUGS
DISPOSITIF DE SÉCURITÉ POUR VÉRIFIER UN AÉRONEF PILOTÉ À DISTANCE

(30) Priority: 25.05.2016 IT UA20163790
(43) Date of publication of application: 10.04.2019
(73) Proprietor: JT Drone Technologies S.r.l., 38066 Riva del Garda (TN) (IT)
(72) Inventor: GUARNATI, Roberto, 38066 Riva del Garda (TN) (IT)
(74) Representative: Petraz, Gilberto Luigi
(86) International application number: PCT/IB2017/053025
(87) International publication number: WO 2017/203423

(56) References cited:
- WO-A1-2016/025444
- CN-U- 204 926 552
- DE-A1- 19 909 573
- DE-U1-202015 006 282
- FR-A1- 3 012 423
- KR-A- 20150 062 607
- US-A- 3 749 333
- US-A1- 2002 070 315
- US-A1- 2003 057 327
- US-B1- 8 903 568

## Description

The present invention relates to a safety device for controlling a remotely piloted aircraft.

In particular, the present invention is advantageously applied in the aeronautical sector to identify the flight, perform real-time flight monitoring and guarantee flight safety to unmanned aerial vehicles or aircraft, such as UAS (Unmanned Aircraft System) or RPA (Remotely Piloted Aircraft), which are more commonly known as *drones,* which the following description will make explicit reference to without losing its general nature.

What is known is that the ever increasing use of drones forces the aviation sector to deal with and solve technical and safety problems regarding flights, which at the moment have been little explored. Relevant prior art could be documents DE19909573A1, US2002/070315 A1, FR3012423A1, US8903568 B1, US374933 A, US2003/057327 A1, DE202015006282 U1 but none of them is configured to unable the drone to take off/fly if it is not possible to detect fundamental parameters of the drone status such as, for instance flying speed and altitude, actual position (Latitude and Longitude) of the drone, in that way increasing people's safety and integrity of things should an accident with the drone occur.

At present, there are still few pieces of reliable information on the reliability of drones, and on the issues and drawbacks connected to their operation, as well as on the data concerning accidents occurred during flights.

In this regard, recent Italian (ENAC), Community and international directives on unmanned aircraft or remotely piloted aircraft establish requirements that must be met regarding the connection transmissions of the drones to a remote platform (via GPRS, 4G), the recording and storage of flight data on the remote platform itself (WEB server / IOS app / ANDROID app), and real-time and delayed data consultation (by police forces, and/or insurance companies) and/or drone pilots-operators, by using mobile devices or accessing an IT portal).

What is therefore needed is knowing the fundamental parameters such as, in particular, the identification of drone pilot-operator, flight date and time, flying speed and altitude, actual position (Latitude and Longitude) of the drone, and distance between the pilot-operator and the drone itself.

The object of the present invention is, therefore, to manufacture a device capable of controlling the flight of a remotely piloted aircraft or aerial vehicle by meeting the above-described requirements and having an in-depth knowledge of the above-mentioned parameters.

The structural and functional characteristics of the present invention and its advantages over the known art will be clearer and more evident from the claims below, and in particular from an examination of the following description, made with reference to the attached schematic drawings, and relative to a preferred but not-limiting embodiment of a safety device for controlling a remotely piloted aircraft, wherein:

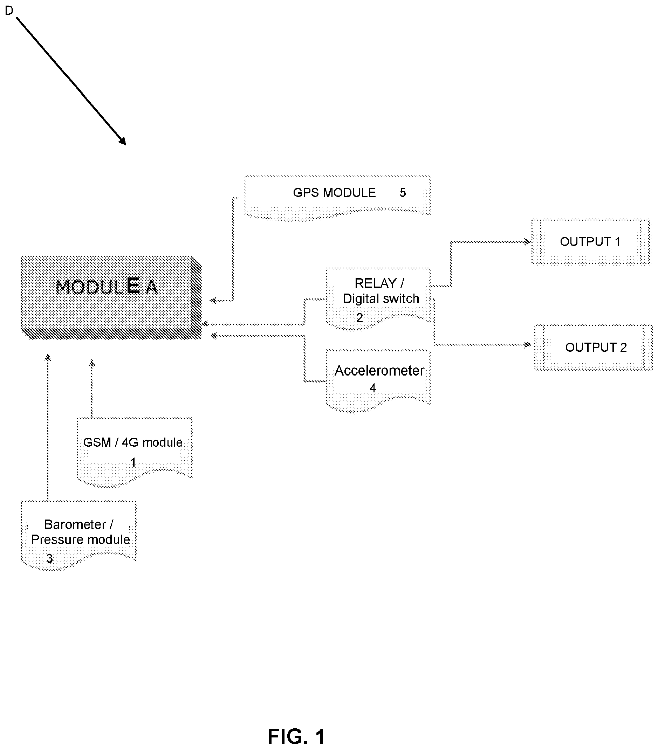

- Figure 1 is a schematic and block view of a first component of the device of the present invention;

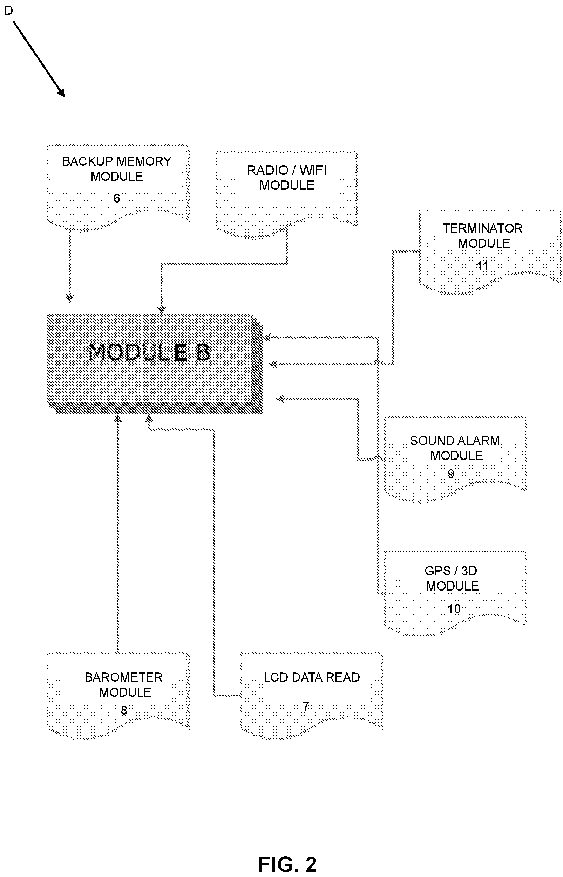

- Figure 2 is a schematic and block view of a second component of the device of the present invention; and
- Figure 3 is a block diagram showing the operation of the device of the present invention.

According to the attached schematic figures, 1 to 3, the device of the present invention, generally designated by D, comprises a first module A suitable to be installed on an RPA drone (not shown) and substantially made of a GSM/4G data card 1 and a relay 2 (analogue/digital switch) connected to an output and to a special parachute (known and not shown - output) for the RPA drone and suitable to trigger the opening of the parachute itself.

Module A is also equipped with a barometer 3 for detecting atmospheric pressure, an accelerometer 4, a GPS detector 5 of the spatial position, and its own internal battery means (not shown), preferably, but not limited to, the 1200 mAh Lipo 2S type.

The device D further comprises a second module B suitable to be installed on the ground on a land base of the above-mentioned RPA drone and made of a memory card unit 6, which operates both in real-time and backup modes (preferably, but not limited to, it is a 128GB card), and a data read and control LCD unit 7. Module B is also equipped with a barometer 8 for detecting atmospheric pressure, sound alarm means 9, a GPS detector 10 of the spatial position, and own internal battery means (not shown), preferably, but not limited to, the 2200 mAh Lipo 4S type.

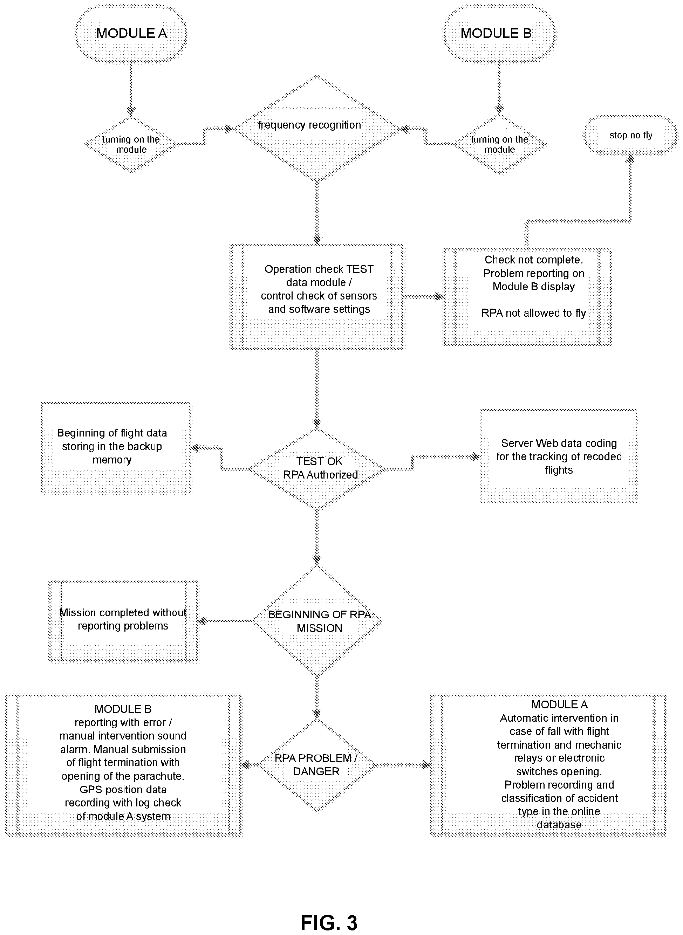

Modules A and B can be programmed/set by the RPA drone pilot and are suitable to operate in connection and in a radio/wireless coupled mode to each other: when in use, if module B does not detect module A, the RPA drone cannot perform the basic flight functions and therefore the RPA drone is unable to take off/fly, as it is clearly shown in the block diagram relative to operation of figure 3.

Specifically, when the RPA drone flies, module A is suitable to transfer the required flight data via a Wi-Fi or radio-relay system for a control check, and simultaneously as a backup copy sent to card of unit 6 of module B.

The aforementioned module B is land-based and, besides being used as a backup, it is also suitable to allow the pilot (or co-pilot) to view all flight data of the RPA drone via the unit 7.

The appropriate default security settings for such module B also allow, thanks to the presence of a special flight terminator group 11 connected to and part of module B, to terminate the RPA drone flight (with the possible shutdown of the RPA drone engines) in case of emergency or similar events, by triggering a safety system for a controlled fall down to the ground of the RPA drone (e.g. a parachute or the likes).

Finally, it is to be noted that device D, which is the object of the present invention, is capable of effectively operating during both *non-critical* flights, i.e. during operations that do not envisage to fly over - even in the event of failure and malfunction - congested areas, crowds, urban agglomerations and/or sensitive infrastructures, and *critical*/*mixed-critical* flights, i.e. during operations that envisage to fly over areas where industrial infrastructures, civil structures and infrastructures are present, and in the event of those particular situations which may jeopardize people's safety or the integrity of things should an accident with the RPA drone occurs.

## Claims

1. Safety device (D) for checking a remotely piloted aircraft (RPA), comprising a first module (A) suitable to be installed on said aircraft (RPA) and a second module (B) suitable to be installed on a land base and connected by means of a radio/wireless mode with said first module (A); said first module (A) being suitable to transfer flight data of said aircraft (RPA) to said second module (B) so as to allow said second module (B) to fully control the flight operation of said aircraft (RPA), wherein
said first module (A) comprises GSM/4G data card means (1), switching means (2) suitable to activate safety means for a controlled fall down to the ground of said aircraft (RPA), detecting means (3) of the atmospheric pressure, accelerometers (4), detecting means (5) of the spatial position, and internal battery means,
wherein said first module (A), when the aircraft (RPA) flies, is suitable to transfer the required flight data via a Wi-Fi or radio-relay system for a control check, wherein
said first module (A) and said second module (B) are configured to be programmed and suitable to operate in connection and in a radio/wireless coupled mode to each other and said device (D) is configured in such a way that when in use if said second module (B) does not detect a connection to said first module (A) said aircraft (RPA) is unable to take off or to fly;
**characterised in that** said second module (B) is made of a memory card unit (6) which operates both in real-time and backup modes,
and further **characterised in that** said first module (A), when the aircraft (RPA) flies, is suitable to transfer the required flight data via a Wi-Fi or radio-relay system simultaneously as a backup copy sent to said card unit (6) of said second module (B).

2. Device according to claim 1, **characterized in that** said second module (B) comprises said memory card unit (6), a data read and check unit (7), detecting means (8) of the atmospheric pressure, sound alarm means (9), detecting means (10) of the space position, flight terminator means (11), and internal battery means.

3. Device according to one or more of claims 1 to 2, **characterized in that** said aircraft (RPA) is a drone.

4. Kit comprising a device according to any of claims 1-3 and a remotely piloted aircraft (RPA), **characterized in that** the aircraft (RPA) supports at least one said first module (A) according to one or more of the preceding claims 1 to 3.

## Patentansprüche

1. Sicherheitsvorrichtung (D) zur Kontrolle eines ferngesteuerten Luftfahrzeugs (RPA), umfassend ein erstes Modul (A), das geeignet ist, im Luftfahrzeug (RPA) installiert zu werden, und ein zweites Modul (B), das geeignet ist, in einer Landbasis installiert zu werden und mittels eines Funk-/Drahtlosmodus mit dem ersten Modul (A) verbunden zu werden; wobei das erste Modul (A) geeignet ist, Flugdaten des Luftfahrzeugs (RPA) an das zweite Modul (B) zu übertragen, um so dem zweiten Modul (B) zu ermöglichen, den Flugbetrieb des Luftfahrzeugs (RPA) vollständig zu steuern, wobei das erste Modul (A) GSM/4G-Datenkartenmittel (1), Schaltmittel (2), die geeignet sind, Sicherheitsmittel für einen kontrollierten Absturz des Luftfahrzeugs (RPA) auf den Boden zu aktivieren, Erfassungsmittel (3) für den atmosphärischen Druck, Beschleunigungsmesser (4), Erfassungsmittel (5) für die räumliche Position und interne Batteriemittel umfasst, wobei das erste Modul (A), wenn das Luftfahrzeug (RPA) fliegt, geeignet ist, die erforderlichen Flugdaten durch ein Wi-Fi- oder Richtfunk-System für eine Kontrollprüfung zu übertragen, wobei das erste Modul (A) und das zweite Modul (B) so angepasst sind, dass sie dazu programmiert und geeignet sind, in Verbindung und in einem Funk-/Drahtlos-Kopplungsmodus miteinander zu arbeiten, und die Vorrichtung (D) so angepasst ist, dass das Luftfahrzeug (RPA) im Gebrauch nicht starten oder fliegen kann, wenn das zweite Modul (B) keine Verbindung mit dem ersten Modul (A) erfasst; **dadurch gekennzeichnet, dass** das zweite Modul (B) aus einer Speicherkarteneinheit (6) gebildet ist, die sowohl im Echtzeit- als auch im Sicherungsmodus arbeitet, und ferner **dadurch gekennzeichnet, dass** das erste Modul (A), wenn das Luftfahrzeug (RPA) fliegt, in der Lage ist, die erforderlichen Flugdaten durch ein Wi-Fi- oder Richtfunk-System gleichzeitig als eine Sicherungskopie zu übertragen, die an die Karteneinheit (6) des zweiten Moduls (B) gesendet wird.

2. Vorrichtung nach Anspruch 1, **dadurch gekennzeichnet, dass** das zweite Modul (B) die Speicherkarteneinheit (6), eine Datenlese- und -kontrolleinheit (7), Erfassungsmittel (8) für den atmosphärischen Druck, akustische Alarmmittel (9), Erfassungsmittel (10) für die Raumposition, Flugabbruchmittel (11) und interne Batteriemittel umfasst.

3. Vorrichtung nach einem oder mehreren der Ansprüche 1 bis 2, **dadurch gekennzeichnet, dass** das Luftfahrzeug (RPA) eine Drohne ist.

4. Bausatz umfassend eine Vorrichtung nach einem der Ansprüche 1 bis 3 und ein ferngesteuertes Luftfahrzeug (RPA), **dadurch gekennzeichnet, dass** das Luftfahrzeug (RPA) mindestens ein erstes Modul (A) nach einem oder mehreren der vorhergehenden Ansprüche 1 bis 3 trägt.

## Revendications

1. Dispositif de sécurité (D) pour le contrôle d'un aéronef piloté à distance (RPA), comprenant un premier module (A) adapté pour être installé sur ledit aéronef (RPA) et un deuxième module (B) adapté pour être installé sur une base terrestre et connecté audit premier module (A) au moyen d'un mode radio/sans fil ; ledit premier module (A) étant adapté pour transférer des données de vol dudit aéronef (RPA) vers ledit deuxième module (B) de manière à permettre audit deuxième module (B) de commander entièrement le fonctionnement en vol dudit aéronef (RPA),
ledit premier module (A) comprenant des moyens (1) formant carte de données GSM/4G, des moyens de commutation (2) aptes à activer des moyens de sécurité pour une chute au sol commandée dudit aéronef (RPA), des moyens de détection (3) de la pression atmosphérique, des accéléromètres (4), des moyens (5) de détection de la position dans l'espace, et des moyens formant batterie internes,
ledit premier module (A), lorsque l'aéronef (RPA) vole, est apte à transférer les données de vol requises via un système Wifi ou un faisceau hertzien pour un contrôle de commande, ledit premier module (A) et ledit deuxième module (B) étant configurés pour être programmés et adaptés pour fonctionner en connexion l'un avec l'autre et selon un mode couplé radio/sans fil, et ledit dispositif (D) est configuré de telle manière qu'en utilisation, si ledit deuxième module (B) ne détecte pas une connexion audit premier module (A) ledit aéronef (RPA) est inapte à décoller ou à voler ;
**caractérisé en ce que** ledit deuxième module (B) est constitué d'une unité (6) à carte de mémoire qui fonctionne à la fois en mode temps réel et en mode sauvegarde,
et étant **caractérisé en outre en ce que** ledit premier module (A), lorsque l'aéronef (RPA) vole, est adapté pour transférer les données de vol requises via un système Wifi ou un système de relais radio simultanément en tant que copie de sauvegarde envoyée à ladite unité (6) à carte dudit deuxième module (B).

2. Dispositif selon la revendication 1, **caractérisé en ce que** ledit deuxième module (B) comprend ladite unité (6) à carte de mémoire, une unité (7) de lecture et de vérification de données, des moyens (8) de détection de la pression atmosphérique, des moyens (9) d'alarme sonore, des moyens (10) de détection de la position dans l'espace, des moyens (11) de terminaison de vol et des moyens formant batterie interne.

3. Dispositif selon une ou plusieurs des revendications 1 à 2, **caractérisé en ce que** ledit aéronef (RPA) est un drone.

4. Kit comprenant un dispositif selon l'une quelconque des revendications 1 à 3 et un aéronef piloté à distance (RPA), **caractérisé en ce que** l'aéronef (RPA) supporte au moins un dit premier module (A) selon une ou plusieurs des revendications 1 à 3 précédentes.
